# EUROPEAN PATENT APPLICATION

(11) **EP 0 935 354 A2**
(43) Date of publication of application: **11.08.1999**
(21) Application number: 99300433.2
(22) Date of filing: 21.01.1999
(51) Int. Cl.: H04B 7/26

(54) **Time-division double-way communication system**

(30) Priority: 06.02.1998 JP 2541098
(71) Applicant: ALPS ELECTRIC CO., LTD., Ota-ku Tokyo 145 (JP)
(72) Inventor: Takahashi, Junji, Soma-shi, Fukushima-ken (JP)
(74) Representative: Kensett, John Hinton

(57) **Abstract**

Described herein is a time-division double-way communication system. The time-division double-way communication system comprises a voltage-controlled oscillator (2), a digital signal source (5) for outputting a modulating signal, a phase control circuit (3) and a low-pass filter (4). A voltage having a middle level between a voltage having a high level of a modulating signal and a voltage having a low level thereof is supplied to the voltage-controlled oscillator together with a control voltage. During a transmission time slot, the modulating signal is superimposed on the voltage of the middle level, followed by input to the voltage-controlled oscillator where a carrier signal is digitally-modulated based on the modulating signal, whereas during a blind time slot immediately before the transmission time slot, the modulating signal is not inputted to the voltage-controlled oscillator.

## Description

The present invention relates to a time-division double-way communication system, and particularly to a time-division double-way communication system capable of restraining a change in transmit frequency during a transmission time slot immediately after a blind slot.

### Description of the Related Art:

In a time-division bi-directional or double-way (TDD) system, transmission time slots each corresponding to a transmitting period and reception time slots each corresponding to a receiving period are alternately provided on a time basis. Further, the transmission time slots and reception time slots are respectively divided into plural form to perform time-division communications. Blind slots are respectively provided immediately before the reception time slots. During a period corresponding to each blind slot, transmission and reception are not performed and preparations for transmission in the next transmission time slot are carried out.

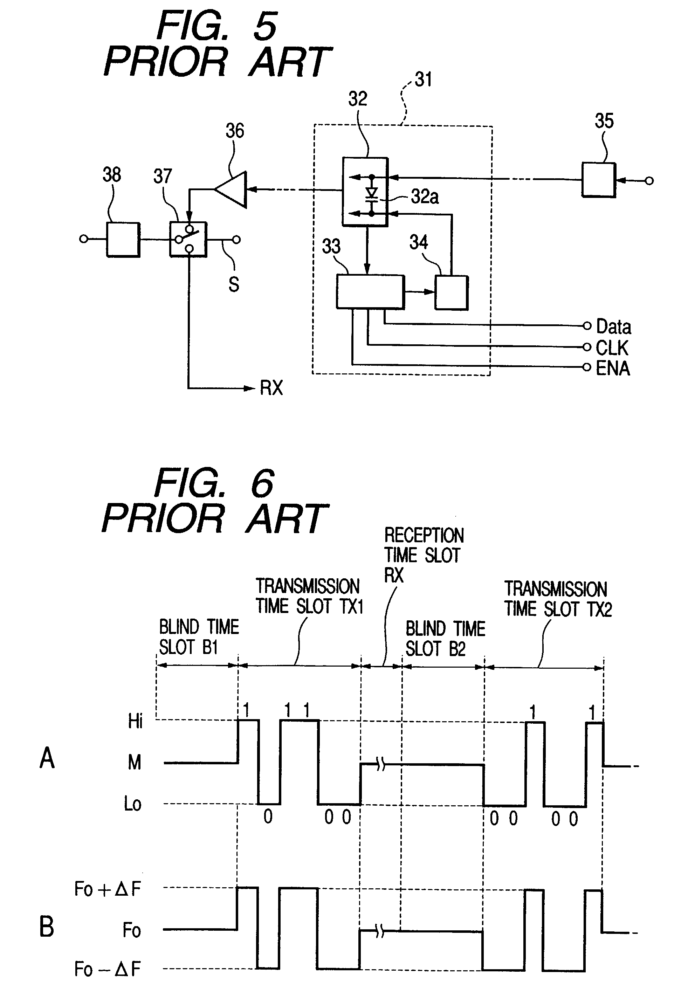

Fig. 5 is a block diagram showing a configuration of a transmitter or transmission unit of a transmitter-receiver employed in a conventional time-division double-way communication system. In Fig. 5, a modulation unit 31 has a voltage-controlled oscillator 32 for outputting an oscillation signal which serves as a carrier signal, a phase control circuit 33 and a low-pass filter 34. Some of an oscillation output from the voltage-controlled oscillator 32 is inputted to the phase control circuit 33. Here, the voltage-controlled oscillator has a varactor diode 32a. Oscillation frequencies therefrom are controlled according to the voltage supplied to the varactor diode 32a. Further, the phase control circuit 33 includes a programmable frequency divider, a phase comparator, a charge pump, a reference oscillator, etc. although not illustrated in the drawing. The phase comparator compares the phase of an oscillation signal sent from the voltage-controlled oscillator 32 with the phase of an oscillation signal produced from the reference oscillator. An error signal based on the difference in phase therebetween is inputted to the low-pass filter 34 through the charge pump. The error signal is smoothed by the low-pass filter 34, after which it is applied to the varactor diode 32a within the voltage-controlled oscillator 32 as a control voltage. As a result, the voltage-controlled oscillator 32, the phase control circuit 33 and the low-pass filter 34 take a closed loop, i.e., they constitute a so-called PLL circuit. Thus, the frequency of the oscillation signal produced from the voltage-controlled oscillator 32 is controlled fixedly.

Now, a clock signal CLK, frequency data DATA, an enable signal ENA, etc. are inputted to the phase control circuit 33. The frequency of the oscillation signal of the voltage-controlled oscillator 32 is set so as to reach a carrier frequency (F0) according to the frequency data DATA.

After a modulating signal (digital signal) outputted from a digital signal source 35 has been subjected to a predetermined process such as waveform shaping or the like, the so-processed signal is inputted to the voltage-controlled oscillator 32. The modulating signal is one obtained by converting a voice signal or the like to a digital signal by an unillustrated AID converter. The modulating signal is applied to the varactor diode 32a of the voltage-controlled oscillator 32 together with the control voltage outputted from the low-pass filter 34 to thereby digitally-modulate (FSK-modulate) the oscillation signal of the voltage-controlled oscillator 32. The voltage-controlled oscillator 32 transmits the digitally-modulated transmitting signal to a power amplifier 36. The transmitting signal is amplified by the power amplifier 36, followed by transmission to an unillustrated antenna through a transmit-receive selector switch 37 and a band-pass filter 38.

The transmit-receive selector switch 37 is supplied with a transmit-receive switch signal S. During a transmission time slot, the transmit-receive switch signal S is brought to a high level, for example, so that the transmit-receive selector switch 37 serves so as to transmit the transmitting signal outputted from the power amplifier 36 to the band-pass filter 38. During a reception time slot, the transmit-receive switch signal S is brought to a low level, so that the transmit-receive selector switch 37 serves so as to send a received signal sent from the band-pass filter 38 to a reception unit or receiver RX.

Operation of the transmission unit at signal transmission will next be explained in accordance with Fig. 6. During a period corresponding to a blind slot (B1) prior to a transmission time slot (TX1), the enable signal ENA is first rendered high in level, for example so that the phase control circuit 33 is brought to an operating state. Thus, the phase control circuit constitutes a closed loop together with the voltage-controlled oscillator 32 and the low-pass filter 34. The voltage-controlled oscillator 32 oscillates at a predetermined frequency based on the frequency data DATA, i.e., the carrier frequency (F0). Since no source voltage is supplied to the power amplifier 36 in this state and hence the oscillation signal is blocked by the power amplifier 36, it is not transmitted to the antenna (not shown). When the oscillation frequency of the voltage-controlled oscillator 32 is PLL-controlled and converges on the carrier frequency (F0), the enable signal ENA is rendered low in level to stop the supply of the power to the phase control circuit 33, for example, whereby the phase control circuit 33 is brought to a non-operating state. As a result, the PLL circuit is brought to an open loop. However, since the output impedance of the charge pump is extremely large and the low-pass filter 34 has a capacitor (not shown), the voltage (i.e., control voltage) charged on the capacitor till that time is applied to the varactor diode of the voltage-controlled oscillator 32 while remaining held as it is. Therefore, the voltage-controlled oscillator 32 sustains oscillations at the carrier frequency (F0). Incidentally, the modulating signal outputted from the digital signal source 35 is not inputted to the voltage-controlled oscillator 32 during this period.

Now the modulating signal takes three voltage-value states (called "three-state voltages") so that when digital data is taken as "1", the modulating signal results in a voltage value of a high level (Hi), when the digital data is taken as "0", it is brought to a voltage value of a low level (Lo), and when no data exists, it takes a voltage value of an intermediate or middle level (M) between the high and low levels, as shown in Fig. 6A illustrative of the waveform of the modulating signal. Thus, the voltage-controlled oscillator 32 oscillates at the carrier frequency (F0) during a blind slot in a state in which the voltage of the middle level (M) from the digital signal source 35 has been also applied to the varactor diode of the voltage-controlled oscillator 32.

When the period corresponding to the next transmission time slot (TX1) is reached, the modulating signal outputted from the digital signal source 35 is inputted to the varactor diode 32a of the voltage-controlled oscillator 32 so that the oscillation signal of the voltage-controlled oscillator 32 is FSK-modulated.

Now, since the modulating signal is changed to the high level (Hi) and the low level (Lo) with the same amplitude with the voltage of the middle level (M) as the center, the voltage-controlled oscillator 32 is activated such that the oscillation frequency thereof is shifted upward and downward by the same frequency (ΔF) with the carrier frequency (F0) as the center. That is, when the digital data about the modulating signal is taken as "1", the oscillation frequency results in (F0 + ΔF), whereas when the digital data is taken as "0", the oscillation frequency becomes (F0 - ΔF). The oscillation frequency changes according to the high level (Hi) and low level (Lo) of the modulating signal.

When the transmission time slot (TX1) is terminated, the modulating signal passes through the reception time slot (RX) and is changed to the next blind time slot (B2). During the reception time slot (RX) and the blind time slot (B2), no modulating signal is outputted from the digital signal source 35. Thus, the voltage of the middle level (M) from the digital signal source 35 is applied to the varactor diode 32a of the voltage-controlled oscillator 32. During the reception time slot (RX) and the blind time slot (B2), the enable signal ENA is rendered high in level again so that the power is supplied to the phase control circuit 33 to bring the PLL circuit to a closed loop. Thus, the voltage-controlled oscillator 32 oscillates at a local oscillation frequency based on the frequency data DATA during the reception time slot (RX) and oscillates again at the carrier frequency (F0) during the following blind time slot (B2).

Even during the next transmission time slot (TX2), the carrier of the voltage-controlled oscillator 32 is subjected to predetermined FSK-modulation in a manner similar to the previous transmission time slot (TX1).

As described above, during the transmission time slots (TX1 and TX2) at which the FSK-modulation is carried out, power consumption of the phase control circuit 33 can be reduced by bringing to an open loop, the modulation unit 31 wherein the supply of power to the phase control circuit 33 is stopped to constitute the PLL circuit. Further, this open loop makes phase control ineffective and hence the voltage-controlled oscillator 32 can perform an accurate modulation operation.

While the carrier is modulated using the modulating signal having the three-state voltages in the conventional time-division double-way communication system as described above, there is one in which it is modulated by a modulating signal having two-state voltages depending on communication systems. In this case, a problem arises in that if the carrier is modulated by the modulating signal having the two-state voltages, then accurate modulation cannot be carried out.

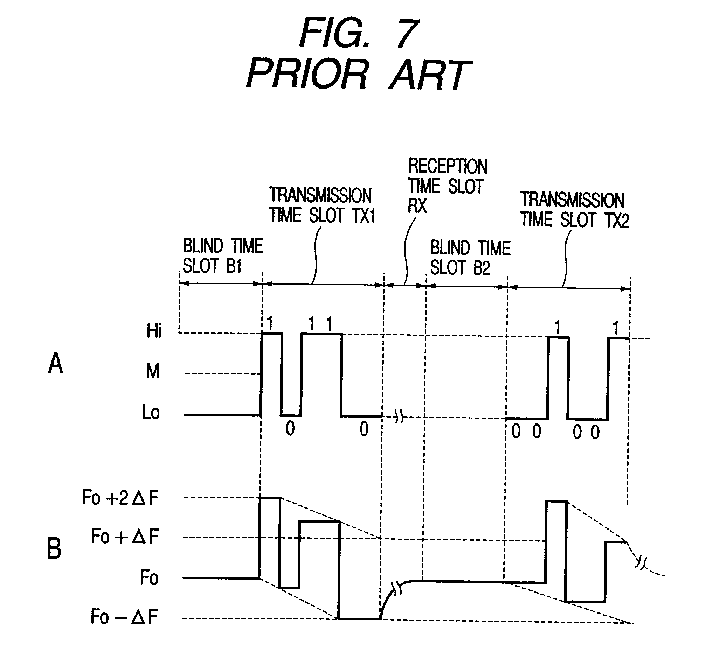

This will be explained below with reference to Fig. 7. A modulating signal having two-state voltages has voltages represented in binary form so that when digital data about the modulating signal is taken as "1", it becomes a voltage value of a high level (Hi), whereas when the digital data is taken as "0", it becomes a voltage value of a low level (Lo), as shown in Fig. 7A. When no modulating signal exists, the voltage value of the high level (Hi) or low level (Lo), which has been brought to the final digital data, is brought to a held state.

On the other hand, when no modulating signal exists, the voltage-controlled oscillator 32 oscillates at the carrier frequency (F0) according to the frequency DATA inputted to the phase control circuit 33. Thus, let's assume that a voltage of a low level, which does not correspond to digital data, would be outputted during a blind time slot (B1) immediately before the first transmission time slot (TX1) as shown in Fig. 7A by way of example. Since the enable signal ENA is high in level in this state, the voltage-controlled oscillator 32 is controlled so as to oscillate at the carrier frequency. Even if the modulating signal is switched to the next transmission time slot (TX1) here, the voltage-controlled oscillator 32 continuously oscillates at the carrier frequency (F0). Thus, when the first or initial digital data is taken as "1" as shown in Fig. 7A when the modulating signal is inputted to the voltage-controlled oscillator 32, the varactor diode of the voltage-controlled oscillator 32 is supplied with a change in the voltage from the low level (Lo) to the high level (Hi). Therefore, the oscillation frequency of the voltage-controlled oscillator 32 changes from the carrier frequency (F0) so as to reach (F0 + 2ΔF) as shown in Fig. 7B. If the digital data reaches the low level (Lo), then the oscillation frequency of the voltage-controlled oscillator 32 becomes F0. Subsequently, the oscillation frequency of the voltage-controlled oscillator 32 gradually changes to (F0 + ΔF) AND (F0 - ΔF) with the center frequency F0 as the center according to the time constant of the PLL circuit. Fig. 7B shows a time axis in shortened form.

When the transmission time slot (TX1) is terminated, the modulating signal passes through the reception time slot (RX) and is changed to the next blind time slot (B2). During the reception time slot (RX) and the blind time slot (B2), no modulating signal is outputted from the digital signal source 35. Thus, let's assume that while the final digital data on the modulating signal in the transmission time slot (TX1) is held and applied to the voltage-controlled oscillator 32 from the digital signal source 35, the present digital data would be the low level (Lo) as shown in Fig. 7A. During the reception time slot (RX) and the next blind time slot (B2), the enable signal ENA is rendered high in level again so that the power is supplied to the phase control circuit 33 to bring the PLL circuit to a closed loop. As a result, the voltage-controlled oscillator 32 is activated such that the oscillation frequency thereof changes from F0 - ΔF to the carrier frequency (F0) and converges thereon based on the frequency data DATA during the reception time slot (RX).

Even during the next transmission time slot (TX2), the carrier of the voltage-controlled oscillator 32 is subjected to FSK-modulation in a manner similar to the previous transmission time slot (TX1).

Thus, when the digital data corresponds to the modulating signal having the two-state voltages, the oscillation frequency of the voltage-controlled oscillator is shifted by ΔF in the start stage of the transmission time slot, so that normal communication is made impossible. Accordingly, an additionally-configured dedicated transmitter-receiver must be used for the modulating signal having the two-state voltages, thus causing a great economical burden.

With the foregoing in view, it is therefore an object of the present invention to provide a time-division double-way communication system capable of effecting accurate FSK-modulation on a modulating signal having voltage values of two states as well as on a modulating signal having voltage values of three states.

Preferably, for achieving the above object, there is provided a time-division double-way communication system, comprising a voltage-controlled oscillator for outputting a carrier signal therefrom; a digital signal source for outputting a modulating signal during a transmission time slot; a phase control circuit for generating an error signal based on the carrier signal; and a low-pass filter for inputting a control voltage based on the error signal to the voltage-controlled oscillator, the phase control circuit and the low-pass filter constituting a PLL circuit together with the voltage-controlled oscillator, and wherein a voltage having a middle level between a voltage having a high level of the modulating signal and a voltage of a low level thereof is supplied to the voltage-controlled oscillator together with the control voltage, and during a transmission time slot, the modulating signal is superimposed on the voltage having the middle level and the superimposed signal is inputted to the voltage-controlled oscillator where the carrier signal is digitally-modulated based on the modulating signal, whereas during a blind time slot immediately before the transmission time slot, the modulating signal is avoided from being inputted to the voltage-controlled oscillator.

Preferably, a bias voltage supply circuit for generating the voltage having the middle level is provided and switch means for bringing input and output terminals into conduction or non-conduction is provided between the bias voltage supply circuit and the digital signal source. During the transmission time slot, the switch means is brought into conduction so as to superimpose the modulating signal on the voltage having the middle level, whereas during the blind time slot, the switch means is brought into non-conduction.

Preferably, the switch means is provided as an analog switch, which is supplied with a transmit-receive switch signal so that the input terminal and the output terminal are brought into conduction according to the transmit-receive switch signal during only the transmission time slot.

Preferably, a plurality of voltage-division resistors are used for the bias voltage supply circuit and at least one of the voltage-division resistors is used as a variable resistor.

A typical one of the present invention has been shown in brief. However, the various inventions of the present application and specific configurations of these inventions will be understood from the following description of a preferred embodiment, which is by way of example only.

While the specification concludes with claims particularly pointing out and distinctly claiming the subject matter which is regarded as the invention, it is believed that the invention, the objects and features of the invention and further objects, features and advantages thereof will be better understood from the following description taken in connection with the accompanying drawings in which:
Fig. 1 is a block diagram showing a transmission unit of a time-division double-way communication system according to the present invention;
Fig. 2 is a circuit diagram illustrating a configuration of a bias voltage supply circuit employed in the transmission unit of the time-division double-way communication system according to the present invention;
Figs. 3A and 3B are timing charts for describing operation of the transmission unit of the time-division double-way communication system according to the present invention;
Figs. 4A and 4B are timing charts for describing another operation of the transmission unit of the time-division double-way communication system according to the present invention;
Fig. 5 is a block diagram showing a transmission unit of a conventional time-division double-way communication system;
Figs. 6A and 6B are timing charts for describing operation of the transmission unit of the conventional time-division double-way communication system; and
Figs. 7A and 7B are timing charts for describing another operation of the conventional time-division double-way communication system.

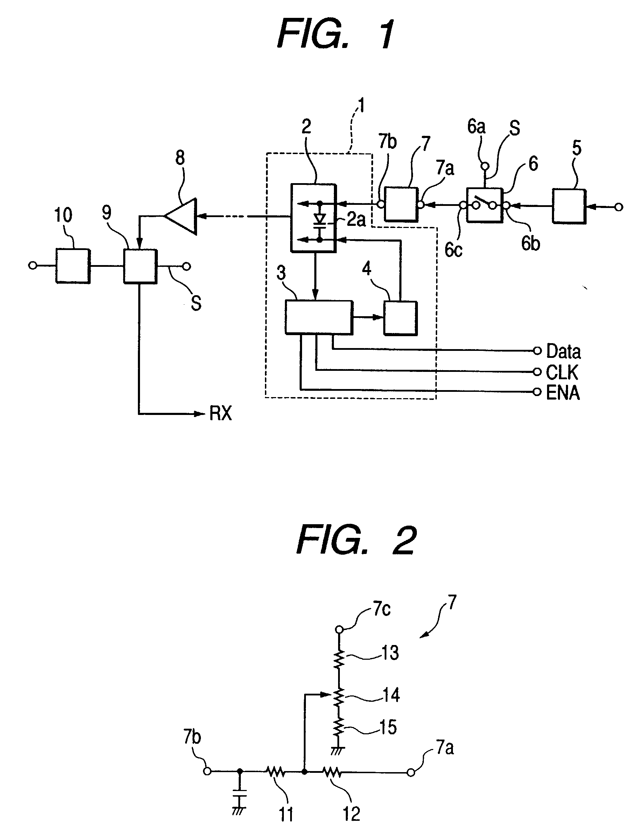

A preferred embodiment of a time-division bi-directional or double-way communication system according to the present invention will hereinafter be described with reference to Figs. 1 through 4. A configuration of the time-division double-way communication system according to the present invention will first be explained with reference to Figs. 1 and 2. A modulation unit 1 has a voltage-controlled oscillator 2 for outputting an oscillation signal which serves as a carrier signal, a phase control circuit 3 and a low-pass filter 4. Some of an output from the voltage-controlled oscillator 2 is inputted to the phase control circuit 3. Here, the voltage-controlled oscillator 2 has a varactor diode 2a. Oscillation frequencies thereof are controlled according to the voltage applied across the varactor diode 2a. Further, the phase control circuit 3 includes a programmable frequency divider, a phase comparator, a charge pump, a reference oscillator, etc. although not illustrated in the drawing. The phase comparator compares the phase of an oscillation signal sent from the voltage-controlled oscillator 2 with the phase of an oscillation signal produced from the reference oscillator. An error signal based on the difference in phase therebetween is inputted to the low-pass filter 4 through the charge pump. The error signal is smoothed by the low-pass filter 4, after which it is applied to the varactor diode 2a lying within the voltage-controlled oscillator 2 as a control voltage. As a result, the voltage-controlled oscillator 2, the phase control circuit 3 and the low-pass filter 4 take a closed loop, i.e., they constitute a so-called PLL circuit. Thus, the frequency of the oscillation signal produced from the voltage-controlled oscillator 2 is controlled fixedly.

Now, a clock signal CLK, frequency data DATA, an enable signal ENA, etc. are inputted to the phase control circuit 3. During a transmission time slot, the oscillation frequency of the voltage-controlled oscillator 2 is set so as to reach a carrier frequency (F0) according to the frequency data DATA. During a reception time slot, a local oscillation signal for reception is set so as to take a predetermined frequency.

After a modulating signal (digital signal) outputted from a digital signal source 5 has been subjected to a predetermined process by an unillustrated waveform shaping circuit or the like, the so-processed signal is inputted to the voltage-controlled oscillator 2 through an analog switch 6 corresponding to switch means and a bias voltage supply circuit 7. The bias voltage supply circuit 7 is a circuit for applying a bias voltage to the varactor diode 2a of the voltage-controlled oscillator 2. The modulating signal is applied to the varactor diode 2a in a state of being superimposed on the bias voltage. The modulating signal is one obtained by converting a voice signal or the like to a digital signal by an unillustrated A/D converter. The modulating signal is applied to the varactor diode 2a of the voltage-controlled oscillator 2 together with the control voltage outputted from the low-pass filter 4 to thereby digitally-modulate (FSK-modulate) the oscillation signal of the voltage-controlled oscillator 2. The voltage-controlled oscillator 2 transmits the digitally-modulated transmitting signal to a power amplifier 8. The transmitting signal is amplified by the power amplifier 8, followed by transmission to an unillustrated antenna through a transmit-receive selector switch 9 and a band-pass filter 10.

The transmit-receive selector switch 9 is supplied with a transmit-receive switch signal S. During a transmission time slot, the transmit-receive switch signal S is brought to a high level, for example, so that the transmit-receive selector switch 9 serves so as to transmit the transmitting signal outputted from the power amplifier 8 to the band-pass filter 10. During a reception time slot, the transmit-receive switch signal S is brought to a low level, so that the transmit-receive selector switch 9 serves so as to send a received signal sent from the band-pass filter 10 to a receiver RX.

The analog switch 6 has a control terminal 6a, an input terminal 6b and an output terminal 6c. A signal identical to the transmit-receive switch signal S inputted to the transmit-receive selector switch 9 is inputted to the control terminal 6a. When the transmit-receive switch signal S is rendered high in level during the transmission time slot, for example, the input terminal 6b and the output terminal 6c are brought into conduction (connected to each other) so that the modulating signal outputted from the digital signal source 5 is inputted to the bias voltage supply circuit 7. During periods (blind time slot and reception time slot) other than the transmit time slot, the transmit-receive switch signal S is rendered low in level so that the input terminal 6b and the output terminal 6c are brought to non-conduction (opened), whereby the input of the modulating signal to the bias voltage supply circuit 7 is blocked.

As shown in Fig. 2, the bias voltage supply circuit 7 has an input terminal 7a, an output terminal 7b and a voltage supply terminal 7c. Further, two resistors 11 and 12 are electrically series-connected between the input terminal 7a and the output terminal 7b. A plurality of voltage-division resistors 13, 14 and 15 are used to make a fraction of a voltage supplied from the voltage supply terminal 7c. The resultant fractional or divided voltage is applied as a bias voltage to a point at which the resistors 11 and 12 are electrically connected to each other. The fractional voltage is set so as to reach a voltage having a level (hereinafter called "intermediate or middle level (M)") lying midway between a voltage having a high level (Hi) and a voltage having a low level (Lo). Here, at least one voltage-division resistor 14 is provided between other voltage-division resistors 13 and 15 as a variable resistor. The fractional voltage can be adjusted to the voltage having the middle level (M) according to the adjustment of the voltage-division resistor 14.

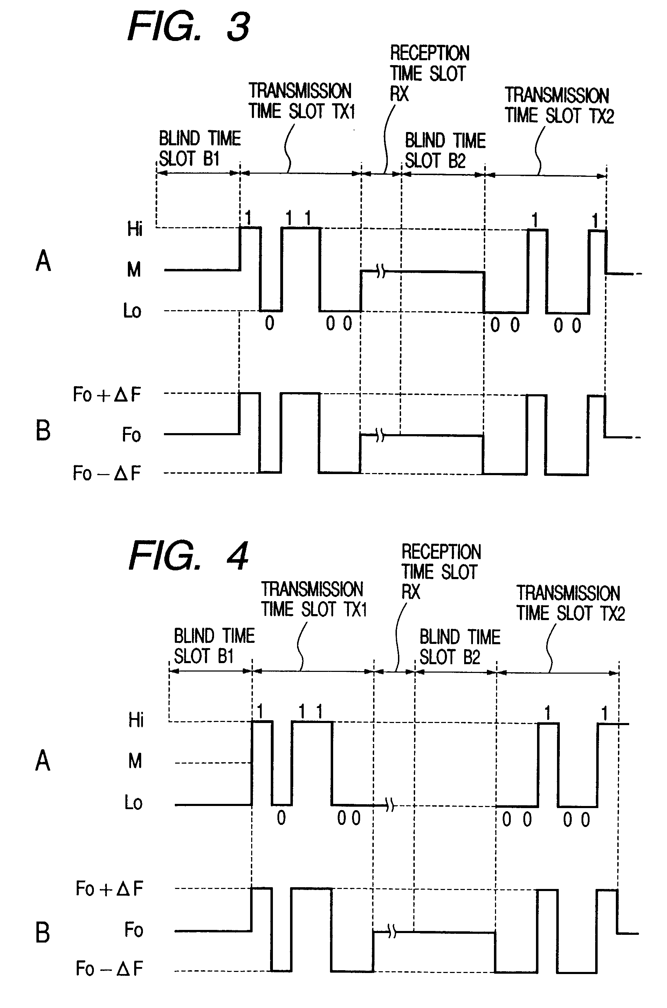

Operation of a transmitter or transmission unit will next be explained in accordance with timing charts shown in Figs. 3 and 4. During a blind time slot (B1) placed immediately before a transmission time slot (TX1), an enable signal ENA is first brought to a high level so that the phase control circuit 3 enters into an operating state, whereby the phase control circuit 3 provides a closed loop together with the voltage-controlled oscillator 2 and the low-pass filter 4 so as to constitute a PLL circuit. Thus, a control voltage based on an error voltage produced from the phase control circuit 3 is applied to the varactor diode 2a of the voltage-controlled oscillator 2 through the low-pass filter 4. On the other hand, since the bias voltage having the middle level voltage (M) outputted from the bias voltage supply circuit 7 is also applied to the varactor diode 2a, the voltage-controlled oscillator 2 is controlled so as to oscillate at the carrier frequency (F0) based on the frequency data DATA in a state in which the control voltage supplied from the low-pass filter 4 and the bias voltage have been inputted thereto. Since the transmit-receive switch signal S inputted to the analog switch 6 is low in level and the input terminal 6b and output terminal 6c are disconnected from each other in this state, no modulating signal is inputted to the voltage-controlled oscillator 2. Further, since no source voltage is supplied to the power amplifier 8 and hence the oscillation signal (carrier signal) produced from the voltage-controlled oscillator 2 is prevented from passing through the power amplifier 8, it is not transmitted to the antenna (not shown).

When the oscillation frequency of the voltage-controlled oscillator 2 is PLL-controlled and converges on the carrier frequency (F0), the enable signal ENA is rendered low in level and the supply of the power to the phase control circuit 3 is stopped to thereby bring the phase control circuit 3 to a non-operating state. Thus, the PLL circuit is brought to the open loop. However, since the output impedance of the charge pump is extremely large even if the phase control circuit 3 enters the non-operating state and the low-pass filter 4 has a capacitor (not shown), the voltage charged on the capacitor till that time is applied to the varactor diode 2a of the voltage-controlled oscillator 2 while remaining held as it is. Therefore, the voltage-controlled oscillator 2 sustains oscillations at the carrier frequency (F0) in a state in which the control voltage outputted from the low-pass filter 4 and the bias voltage outputted from the bias voltage supply circuit 7 are being applied to the varactor diode 2a of the voltage-controlled oscillator 2.

During the next transmission time slot (TX1), the transmit-receive switch signal S is rendered high in level to thereby bring the input terminal 6b and output terminal 6c of the analog switch 6 to conduction and thereby input the modulating signal outputted from the digital signal source 5 to the bias voltage supply circuit 7 through the analog switch 6.

Now consider where the modulating signal takes three voltage states (called "three-state signal") so that when data is taken as "1", the modulating signal results in a voltage of a high level (Hi), when the data is taken as "0", it is brought to a voltage of a low level (Lo), and when no data exists, it is brought to a voltage of a middle level (M), as shown in Fig. 3A.

Thus, since the modulating signal is changed to the high level (Hi) and the low level (Lo) with the same amplitude with the voltage of the middle level (M) as the center, the voltage-controlled oscillator 2 is activated such that the oscillation frequency thereof is shifted at the same frequency (ΔF) with the carrier frequency (F0) as the center. Thus, when the data is taken as "1", the oscillation frequency results in (F0 + ΔF), whereas when the data is taken as "0", the oscillation frequency becomes (F0 - ΔF). The oscillation frequency changes according to the high level (Hi) and low level (Lo) of the data, so that the carrier signal of the voltage-controlled oscillator 2 is FSK-modulated.

When the transmission time slot (TX1) is terminated, the modulating signal passes through the reception time slot (RX) and is changed to the next blind time slot (B2). During the reception time slot (RX) and the blind time slot (B2), no modulating signal is outputted from the digital signal source 5. During the blind time slot (B2), the transmit-receive switch signal S inputted to the analog switch 6 is brought to the low level to disconnect the input terminal 6b of the analog switch 6 from the output terminal 6c thereof, so that the bias voltage from the bias voltage supply circuit 7 is applied to the varactor diode 2a of the voltage controlled oscillator 2. Further, the PLL circuit is brought to a closed loop so that the voltage-controlled oscillator 2 oscillates at the carrier frequency (F0) as its oscillation frequency.

Even during the next transmission time slot (TX2), the carrier signal is FSK-modulated based on the modulating signal in the same manner as described above.

In the case where the modulating signal takes such a two-state signal in which, as shown in Fig. 4A, when data is taken as "1", the modulating signal results in a voltage of a high level (Hi), when the data is taken as "0", it is brought to a voltage of a low level (Lo), when no modulating signal exists, the level (either the high level or the low level) at the final data at that time is held.

Even in this case, the bias voltage from the bias voltage supply circuit 7 is applied to the varactor diode 2a of the voltage-controlled oscillator 2 during the blind time slot (B1), so that the voltage-controlled oscillator 3 oscillates at the carrier frequency (F0) until the modulating signal is inputted as shown in Fig. 4B. When the first or initial data is inputted as "1" during a transmission time slot (TX1), the voltage applied to the varactor diode 2a of the voltage-controlled oscillator 2 changes from the middle level (M) to the high level (Hi). Therefore, the oscillation frequency of the voltage-controlled oscillator 2 results in (F0 + ΔF) as shown in Fig. 4B. When the data is taken as "0", the oscillation frequency becomes (F0 - ΔF) and the oscillation frequency changes according to the high level (Hi) and low level (Lo) of the modulating signal, whereby the carrier signal produced from the voltage-controlled oscillator 2 is FSK-modulated.

When the transmission time slot (TX1) is completed, the modulating signal passes through the reception time slot (RX) and is changed to the next blind time slot (B2). During the reception time slot (RX) and the blind time slot (B2), no modulating signal is outputted from the digital signal source 5. During the blind time slot (B2), the transmit-receive switch signal S inputted to the analog switch 6 is brought to the low level to disconnect the input terminal 6b of the analog switch 6 from the output terminal 6c thereof, so that the bias voltage from the bias voltage supply circuit 7 is applied to the varactor diode 2a of the voltage- controlled oscillator 2. Further, the PLL circuit is brought to a closed loop so that the voltage-controlled oscillator 2 oscillates at the carrier frequency (F0) as its oscillation frequency.

Even during the next transmission time slot (TX2), the carrier signal is FSK-modulated based on the modulating signal in the same manner as described above.

Thus, the voltage of the middle level between the voltage of the high level (Hi) at the time that the data on the modulating signal is "1" and the voltage of the low level (Lo) at the time that the data is "0", i.e., the voltage of the middle level (M) is applied to the varactor diode 2a of the voltage-controlled oscillator 2 as a bias voltage, and the modulating signal is superimposed on the bias voltage during the transmission time slot. As a result, the FSK-modulation can be reliably executed even by the modulating signal given as the two-state signal as well as by the modulating signal given as the three-state signal.

As has been described above, the time-division double-way communication system of the present invention can reliably provide not only FSK-modulation based on a modulating signal taken as a three-state signal but also FSK-modulation based on a modulating signal taken as a two-state signal since a bias voltage of a middle level between a voltage of a high level of the modulating signal and a voltage of a low level thereof is supplied to a voltage-controlled oscillator together with a control voltage, and during a transmission time slot, the modulating signal is superimposed on the voltage of the middle level and the superimposed signal is inputted to the voltage-controlled oscillator where a carrier signal is digitally-modulated based on the modulating signal, whereas during a blind time slot immediately before the transmission time slot, no modulating signal is inputted to the voltage-controlled oscillator.

In the time-division double-way communication system according to the present invention as well, a bias voltage supply circuit for generating a bias voltage having a middle level is provided. Switch means for bringing input and output terminals to conduction or non-conduction is provided between the bias voltage supply circuit and a digital signal source. During a transmission time slot, the switch means is brought into conduction to superimpose the modulating signal on the bias voltage, whereas during a blind time slot, the switch means is brought into non-conduction. Therefore, the modulating signal is superimposed on the bias voltage during a transmission time slot according to only the conduction and non-conduction of the switch means, and the superimposed signal is inputted to the voltage-controlled oscillator where a carrier signal can be digitally-modulated based on the modulating signal. Further, the input of the modulating signal to the voltage-controlled oscillator can be avoided during a blind time slot immediately before the transmission time slot.

Further, in the time-division double-way communication system according to the present invention, the switch means is provided as an analog switch. It is therefore possible to provide substantially complete isolation between the bias supply circuit and a digital signal source in a non-conducting state of the analog switch and to prevent the modulating signal from entering the bias voltage supply circuit. Further, since a transmit-receive switch signal is inputted to the analog switch and the input and output terminals are brought into conduction according to the transmit-receive switch signal during only the transmission time slot, whether the modulating signal should be inputted to the switch means, can be linked to transmit-receive selection or changeover of the time-division double-way communication system.

Moreover, in the time-division double-way communication system according to the present invention, a plurality of voltage-division resistors are used for the bias voltage supply means and at least one of them is provided as a variable resistor. Therefore, the variable resistor is adjusted so that the voltage of the middle level supplied to the voltage-controlled oscillator can be set accurately.

While the present invention has been described with reference to the illustrative embodiment, this description is not intended to be construed in a limiting sense. Various modifications of the illustrative embodiment will be apparent to those skilled in the art on reference to this description. It is therefore contemplated that the appended claims will cover any such modifications or embodiments as fall within the true scope of the invention.

## Claims

1. A time-division double-way communication system, comprising:
a voltage-controlled oscillator for outputting a carrier signal therefrom;
a digital signal source for outputting a modulating signal in a transmission time slot;
a phase control circuit for generating an error signal based on the carrier signal; and
a low-pass filter for inputting a control voltage based on the error signal to said voltage-controlled oscillator,
said phase control circuit and said low-pass filter constituting a PLL circuit together with said voltage-controlled oscillator, and
wherein a bias voltage having a middle level voltage between a voltage having a high level of the modulating signal and a voltage having a low level thereof is supplied to said voltage-controlled oscillator together with the control voltage, and during a transmission time slot, said modulating signal is superimposed on the bias voltage and the superimposed signal is inputted to said voltage-controlled oscillator where the carrier signal is digitally-modulated based on the modulating signal, whereas during a blind time slot immediately before the transmission time slot, the modulating signal is avoided from being inputted to said voltage-controlled oscillator.

2. The time-division double-way communication system according to claim 1, further comprising a bias voltage supply circuit for generating said bias voltage, and switch means for bringing input and output terminals into conduction or non-conduction, said switch means being provided between said bias voltage supply circuit and said digital signal source, and wherein during the transmission time slot, said switch means is brought into conduction so as to superimpose the modulating signal on the bias voltage, whereas during the blind time slot, said switch means is brought into non-conduction.

3. The time-division double-way communication system according to claim 2, wherein said switch means is provided as an analog switch, which is supplied with a transmit-receive switch signal so that said input terminal and said output terminal are brought into conduction according to the transmit-receive switch signal during only the transmission time slot.

4. The time-division double-way communication system according to claim 2 or 3, wherein a plurality of voltage-division resistors are used for said bias voltage supply circuit and at least one of said voltage-division resistors is used as a variable resistor.
